# EUROPEAN PATENT APPLICATION

(11) **EP 4 570 629 A1**
(43) Date of publication of application: **18.06.2025**
(21) Application number: 23851278.4
(22) Date of filing: 05.05.2023
(51) Int. Cl.: B62D 25/10, B62D 25/12, B60Q 1/00, G02B 1/14

(54) **FRONT COVER STRUCTURE AND VEHICLE**

(30) Priority: 12.08.2022 CN 202210970246
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: ZHAO, Xiaonan, Ningbo, Zhejiang 315899 (CN); ZHANG, Dongsheng, Ningbo, Zhejiang 315899 (CN); HE, Da, Ningbo, Zhejiang 315899 (CN); XU, Lingjie, Ningbo, Zhejiang 315899 (CN); LIU, Shengjia, Ningbo, Zhejiang 315899 (CN); JIANG, Xiaoyuan, Ningbo, Zhejiang 315899 (CN); YANG, Dacheng, Ningbo, Zhejiang 315899 (CN)
(74) Representative: Studio Torta S.p.A.
(86) International application number: PCT/CN2023/092340
(87) International publication number: WO 2024/032048

(57) **Abstract**

A front cover structure (100) and a vehicle. The vehicle includes a front cover outer plate (110) and a front cover plastic inner plate (120). The front cover outer plate (110) includes a transparent plastic layer (111) and a colored plastic layer (112), where along a thickness direction of the front cover outer plate (110), the transparent plastic layer (111) is provided on an upper surface of the colored plastic layer (112); where along the thickness direction, the front cover outer plate (110) and the front cover plastic inner plate (120) are stacked, and the front cover plastic inner plate (120) is connected to the colored plastic layer (112).

## Description

The present application claims priority to Chinese Patent Application No. 202210970246.6, filed to the Chinese National Intellectual Property Administration on August 12, 2022 and entitled "FRONT COVER STRUCTURE AND VEHICLE", which is hereby incorporated by reference in its entirety.

### TECHNICAL FIELD

The present application relates to the technical field of vehicles, and in particular, to a front cover structure and a vehicle.

### BACKGROUND

With the development of the vehicle industry, especially the rise of electric vehicles, people have higher and higher requirements in the sense of science and technology of vehicles and their light weights. The light weight and the sense of science and technology for a vehicle have become a focus of research and a pursuing goal in the vehicle industry.

A front cover structure of a vehicle is used to cover and close a front engine compartment so that important parts such as an engine, a battery in the front engine compartment are not easily exposed. In the related art, the front cover structure is generally made of a steel plate or an aluminum plate by stamping. Moreover, in order to improve overall strength of the front cover structure, a partial area of the front cover structure is usually further provided with a reinforcing sheet metal. Therefore, the front cover structure is relatively complex and its weight is relatively large, which easily leads to an excessive weight of the entire vehicle, thereby affecting lightweight degree of the vehicle.

### SUMMARY

The present application provides a front cover structure and a vehicle, which can solve the problem that a front plate structure affects lightweight degree and sense of science and technology for a vehicle.

In one aspect, the present application provides a front cover structure for a vehicle. The front cover structure includes:
a front cover outer plate, including a transparent plastic layer and a colored plastic layer, where along a thickness direction of the front cover outer plate, the transparent plastic layer is provided on an upper surface of the colored plastic layer;
where along the thickness direction, the front cover outer plate and the front cover plastic inner plate are stacked, and the front cover plastic inner plate is connected to the colored plastic layer.

In the front cover structure provided in the present application, an overall structure of the front cover outer plate and the front cover plastic inner plate may be both made of plastic material. Therefore, an overall weight of the front cover structure is relatively light, which is advantageous for improving lightweight degree of the vehicle. At the same time, an overall weight of the vehicle is relatively light, which can also reduce energy consumption of the vehicle, and it is beneficial to energy saving.

According to an embodiment of the present application, the front cover outer plate further includes a hardened coating layer, and along the thickness direction, the hardened coating layer is provided on a surface of the transparent plastic layer away from the colored plastic layer.

According to an embodiment of the present application, along the thickness direction, edges of the colored plastic layer and the transparent plastic layer are aligned, and the hardened coating layer wraps the edges of the colored plastic layer and the transparent plastic layer.

According to an embodiment of the present application, the front cover structure further includes an adhesive member, and the adhesive member is provided between the colored plastic layer and the front cover plastic inner plate, to connect the front cover outer plate and the front cover plastic inner plate.

According to an embodiment of the present application, the front cover structure further includes a light-emitting identification assembly, the light-emitting identification assembly includes a light-transmitting identification part and a light source, the colored plastic layer includes a receiving hole, the light-transmitting identification part is located in the receiving hole, and the light source is correspondingly provided on a side of the light-transmitting identification part away from the transparent plastic layer.

According to an embodiment of the present disclosure, the light-emitting identification assembly includes a light-homogenizing plate, and the light-homogenizing plate is provided between the light-transmitting identification part and the light source.

According to an embodiment of the present application, the light-emitting identification assembly further includes a circuit board, the light source is provided on the circuit board, the light-homogenizing plate is connected to the circuit board to form a receiving space, and the light source is located in the receiving space.

According to an embodiment of the present application, the light-emitting identification assembly further includes a light source plastic support, the light source plastic support is connected to the colored plastic layer, and the circuit board is provided on the light source plastic support.

According to an embodiment of the present application, the light-emitting identification assembly further includes a light-transmitting film, the light-transmitting film is provided on a surface of the colored plastic layer away from the transparent plastic layer, the light-transmitting film covers the light-transmitting identification part, the light-transmitting film includes a hardened transparent film layer, an intermediate light-transmitting pattern layer and a transparent plastic base layer, and the hardened transparent film layer is connected to the colored plastic layer.

In another aspect, the present application provides a vehicle, including the front cover structure according to the above embodiments.

### BRIEF DESCRIPTION OF DRAWINGS

The drawings herein are incorporated in and constitute a part of this description, illustrate embodiments consistent with the present application, and serve to explain the principles of the present application together with the description.
FIG. 1 is a schematic structural diagram of a front cover structure in an embodiment of the prior art.
FIG. 2 is a schematic exploded structural diagram of a front cover structure in an embodiment of the present application.
FIG. 3 is a schematic partial cross-sectional structural diagram of a front cover structure in an embodiment of the present application.
FIG. 4 is a schematic partial cross-sectional structural diagram of a front cover structure in another embodiment of the present application.
FIG. 5 is an enlarged schematic diagram at A in FIG. 3.
FIG. 6 is a schematic partial cross-sectional structural diagram of a front cover structure in further another embodiment of the present application.

### Description of reference number:

100, Front cover structure;
110, Front cover outer plate;
111, Transparent plastic layer;
112, Colored plastic layer; 112a, Receiving hole;
113, Hardened coating layer;
120, Front cover plastic inner plate;
130, Adhesive member;
140, Light-emitting identification assembly; 140a, Receiving space;
141, Light-transmitting identification part;
142, Light source;
143, Light-homogenizing plate; 1431, Light-transmitting part; 1432, Support part;
144, Circuit board;
145, Light source plastic support;
146, Light-transmitting film;
1461, Hardened transparent film layer; 1462, Intermediate light-transmitting pattern layer; 1463, Transparent plastic base layer;
200, Front cover structure;
210, Front cover outer plate; 211, External visible plate; 212, Internal bending plate;
220, Front cover inner plate;
X, Thickness direction.

By means of the above-mentioned drawings, explicit embodiments of the present application have been illustrated and will be described in more detail hereinafter. These drawings and written descriptions are not intended to limit the scope of the concept of the present application in any way, but to explain the concept of the present application to those skilled in the art by referring to specific embodiments.

### DESCRIPTION OF EMBODIMENTS

Exemplary embodiments will be described in detail herein, examples of which are illustrated in the accompanying drawings. When the following description refers to the drawings, unless otherwise indicated, the same numerals in different drawings represent the same or similar elements. The implementations described in the following exemplary embodiments do not represent all implementations consistent with the present application. On the contrary, they are only examples of apparatuses and methods consistent with some aspects of the present application, as detailed in the appended claims.

Vehicles in the embodiments of the present application may be an internal combustion engine automobile, an electric automobile and a gas turbine automobile. It is not limited in the present application. Exemplarily, the vehicle of the present application may be an electric automobile.

The vehicle includes a front engine compartment structure and a front cover structure. Important components, such as an engine, a battery, an air filter, and an engine exhaust system, are provided in the front engine compartment structure. The front cover structure may be used to cover and close the internal space of the front engine compartment structure, so that the important components within the front engine compartment structure are not easily exposed.

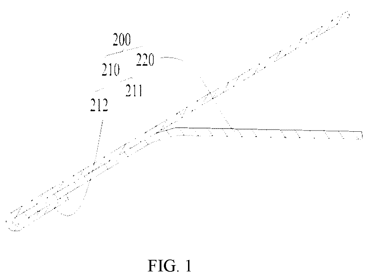

Referring to FIG. 1, a front cover structure 200 includes a front cover inner plate 220 and a front cover outer plate 210. Along a thickness direction of the front cover outer plate 210, the front cover outer plate 210, and the front cover inner plate 220 are stacked. The front cover outer plate 210 is wrapped at an edge of the front cover inner plate 220. Since the front cover outer plate 210 includes an external visible plate 211 in a user visible area, an outer surface of the front cover outer plate 210 needs to have a relatively good quality state, so as to have an aesthetic effect.

The front cover structure 200 is movably connected to a vehicle body. The front cover structure 200 may be opened or closed to facilitate routine maintenance of the vehicle. For example, a user may perform an operation of adding a windshield washer fluid, an engine oil, a brake fluid, or a coolant, etc., through a manner of opening the front cover structure 200.

The front cover inner plate 220 may provide support and reinforcement to the front cover outer plate 210. During the life cycle of the vehicle, the front cover structure 200 needs to be opened or closed many times. The user applies an acting force to the front cover structure 200 when closing the front cover structure 200. The closure of the front cover structure 200 is implemented under the action of the acting force and the gravity of the front cover structure 200 itself. Therefore, the front cover inner plate 220 may have relatively good toughness and impact resistance, so as to reduce the possibility of damage to the front cover structure 200 caused by an impact force when closing the front cover structure 200.

In addition, when the front cover outer plate 210 is impacted by an external acting force, the front cover inner plate 220 may buffer the external acting force, to reduce the deformation degree of the entire front cover structure 200, thereby reducing the possibility that the front cover structure 200 is inwardly depressed and deformed, which affects the operation of the important components in the front engine compartment structure.

In the related art, referring to FIG. 1, the front cover outer plate 210 and the front cover inner plate 220 of the front cover structure 200 are generally made of a steel plate or an aluminum plate by stamping. The front cover outer plate 210 includes an external visible plate 211 and an internal bending plate 212. The internal bending plate 212 is located on a side of the external visible plate 211 facing the front engine compartment structure. The internal bending plate 212 extends along a direction of an edge of the external visible plate 211 to a central area of the external visible plate 211. Along the thickness direction, there is a gap between surfaces of the internal bending plate 212 and the external visible plate 211 facing each other, to receive the front cover inner plate 220.

A manufacturing process of the front cover structure 200 may be, first, stacking the external visible plate 211 and the front cover outer plate 210 along the thickness direction; then, forming the front cover outer plate 210 having the internal bending plate 212 by pressing action of a press machine. The front cover inner plate 220 is located in the gap between the external visible plate 211 and the internal bending plate 212. At the same time, the pressing action of the press machine makes the front cover inner plate 220 and the front cover outer plate 210 closely fit, thereby forming the front cover structure 200.

In addition, in order to improve the strength of the front cover structure 200, the front cover structure 200 usually further includes a plurality of reinforcing sheet metal. The reinforcing sheet metal is provided in a partial area of the front cover outer plate 210 and the front cover inner plate 220. The plurality of reinforcing sheet metal may be connected to the front cover outer plate 210 and the front cover inner plate 220 through a manner of welding or locking.

However, the overall structure of the front cover structure 200 in the related art is relatively complex, which may easily cause the overall weight of the vehicle to be excessively large, thereby affecting the lightweight degree of the vehicle.

Based on the above problems, the applicant improves the front cover structure 100, and the embodiments of the present application are further described below.

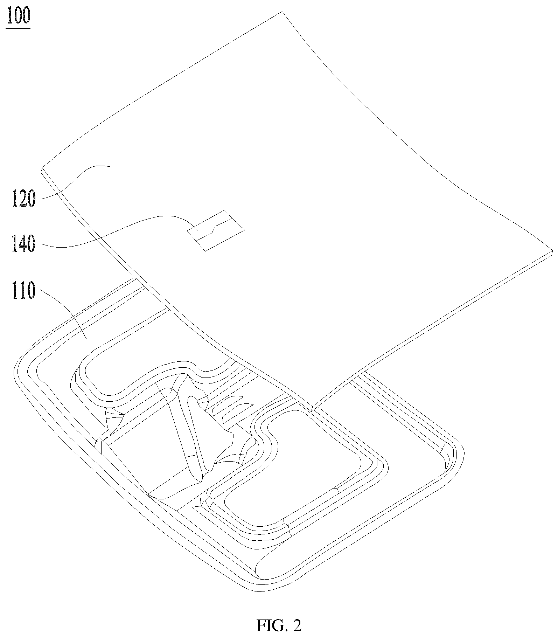

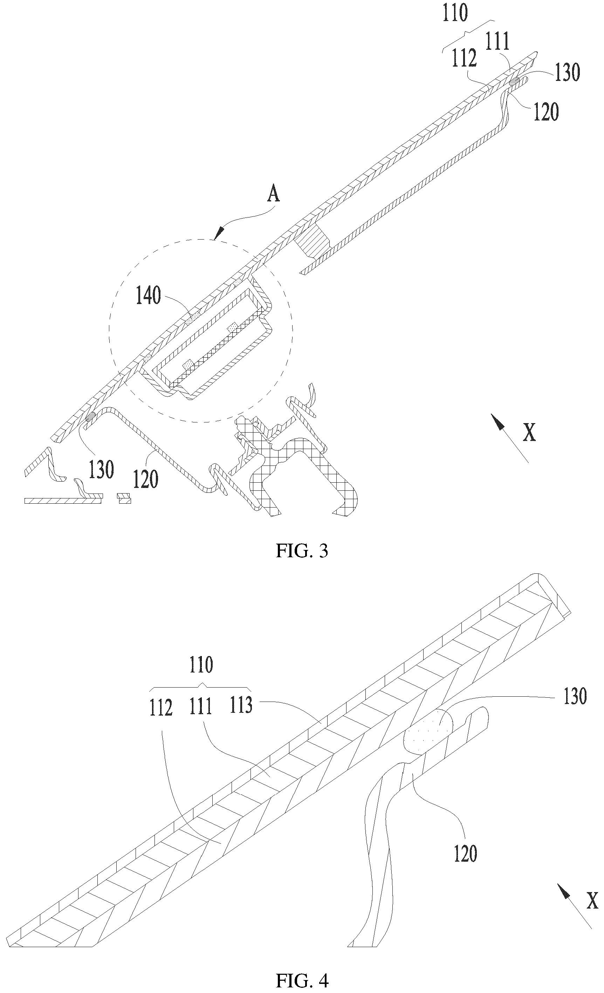

Referring to FIG. 2 and FIG. 3, a front cover structure 100 according to an embodiment of the present application may be used for a vehicle. The front cover structure 100 includes a front cover outer plate 110 and a front cover plastic inner plate 120.

The front cover outer plate 110 includes a transparent plastic layer 111 and a colored plastic layer 112. Along a thickness direction of the front cover outer plate 110, the transparent plastic layer 111 is provided on an upper surface of the colored plastic layer 112. Along the thickness direction, the front cover outer plate 110 and the front cover plastic inner plate 120 are stacked. The front cover plastic inner plate 120 is connected to the colored plastic layer 112.

The front cover plastic inner plate 120 and the overall structure of the front cover outer plate 110 of the present application may both be made of plastic material. Therefore, the overall weight of the front cover structure 100 is relatively light, which is advantageous for improving the lightweight degree of the vehicle. At the same time, the overall weight of the vehicle is relatively light, which can also reduce the energy consumption of the vehicle, and it is beneficial to energy saving.

If the front cover structure 100 is made of steel plates, the front cover structure 100 will need to be painted. Due to the high requirements on an appearance of the front cover structure 100, the requirements on the painting process are also relatively high. For example, a painting effect on the outer surface of the front cover outer plate 110 has high requirements on undesirable phenomena such as color difference, impurities, pinholes, and bubbles. In the present application, however, the color of the colored plastic layer 112 may be the color of the outer surface of the front cover outer plate 110. Therefore, in the front cover structure 100 of the present application, the front cover outer plate 110 does not need to be painted, so that the processing steps of the front cover structure 100 can be reduced, which is advantageous for improving the processing efficiency of the front cover structure 100.

In addition, in the front cover structure 100 of the present application, it can also reduce the possibility of rust caused by scratches not treated in a timely manner on the surface of the front cover structure 100 made of steel plates after painting, which affects the service life of the front cover structure 100.

Along the thickness direction, the transparent plastic layer 111 is provided on the upper surface of the colored plastic layer 112. That is, the transparent plastic layer 111 is provided on the outer surface of the colored plastic layer 112. Therefore, a visual effect of the user viewing the front cover structure 100 of the vehicle from the outside of the vehicle is that the outside of the colored plastic layer 112 is wrapped in a layer of the transparent plastic layer 111, thereby improving the aesthetics and sense of science and technology for the front cover structure 100.

In some examples, the color of the colored plastic layer 112 may be set according to market demand. Exemplarily, the colored plastic layer 112 of the present application may be a highlighted black plastic layer.

In some implementations, as shown in FIG. 4, the front cover outer plate 110 of an embodiment of the present application further includes a hardened coating layer 113. Along the thickness direction, the hardened coating layer 113 is provided on a surface of the transparent plastic layer 111, away from the colored plastic layer 112.

In some examples, after the colored plastic layer 112 and the transparent plastic layer 111 are connected, the hardened coating layer 113 may be provided on the outer surface of the transparent plastic layer 111. On one hand, the hardened coating layer 113 can improve the overall wear resistance of the front cover outer plate 110. For example, when the front cover structure 100 is opened or closed several times, the outer surface of the transparent plastic layer 111 is less likely to be scratched. On the other hand, the hardened coating layer 113 can improve the overall weather resistance of the front cover outer plate 110. For example, in an environment of high temperature or solar radiation, the hardened coating layer 113 may slow down the aging rate of the front cover outer plate 110; in an environment of low temperature or rainy weather, the hardened coating layer 113 may reduce the possibility of cracking or corrosion of the front cover outer plate 110.

In some examples, the hardened coating layer 113 may be a transparent structure, thereby, it is not easy for the hardened coating layer 113 to affect a display effect of the color of the colored plastic layer 112.

In some examples, the hardened coating layer 113 may be a UV (Ultra-Violet Ray, ultra-violet ray) cured coating layer. UV coating liquid is cured on the surface of the transparent plastic layer 111, away from the colored plastic layer 112, to form the UV-cured coating layer. Exemplarily, the UV coating liquid may include resin and auxiliary material.

In some implementations, as shown in FIG. 4, along the thickness direction, the edges of the colored plastic layer 112 and the transparent plastic layer 111 are aligned. The hardened coating layer 113 wraps the edges of the colored plastic layer 112 and the transparent plastic layer 111.

In some examples, the front cover structure 100 is hinged to the vehicle body of the vehicle on a side close to the driver's cab, to enable opening or closing of the front cover structure 100. A position of the front cover structure 100 close to a front end of the vehicle may be provided with a hood lock, to realize locking of the front cover structure 100 with the vehicle body, so that the front cover structure 100 can protect important components in the front engine compartment structure from being easily damaged by human factors.

When the front cover structure 100 is opened or closed, it is easy for the edges of the colored plastic layer 112 and the transparent plastic layer 111 to rub against the vehicle body. Since the hardened coating layer 113 can improve the wear resistance of the front cover structure 100, the hardened coating layer 113 may wrap the edges of the colored plastic layer 112 and the transparent plastic layer 111 to reduce the possibility of the colored plastic layer 112 being abraded, which affects the appearance of the front cover structure 100.

In some examples, the transparent plastic layer 111 and the colored plastic layer 112 may be an integrated injection molding structure. Exemplarily, the front cover outer plate 110 may be manufactured by a two-material injection molding process. The manufacture steps of the front cover outer plate 110 may be as follows.

First, raw material of the colored plastic layer 112 is injected through one of the feed ports of a mold, to form the colored plastic layer 112. Then, the raw material of the transparent plastic layer 111 is injected through another one of feed ports of the mold, to form the transparent plastic layer 111. In this case, the colored plastic layer 112 and the transparent plastic layer 111 form an integrated injection molding structure. Finally, the outer surface of the integrated injection molding structure is cleaned, and surface activated to reduce adhesion of the subsequent hardened coating layer 113 caused by presence of oil dirt and dust on the surface.

In some examples, the front cover plastic inner plate 120 may be made by using a single-material injection molding process, and then oil dirt, dust, and the like on the surface thereof are cleaned, and finally, the front cover outer plate 110 and the front cover plastic inner plate 120 are connected.

In some examples, since both the front cover outer plate 110 and the front cover plastic inner plate 120 may be integrally injection molded, the front cover structure 100 of the present application has a relatively high degree of integration and a relatively high degree of precision, which not only satisfies overall strength of the front cover structure 100, but is also advantageous for improving the assembly efficiency of the front cover structure 100.

Exemplarily, the front cover outer plate 110 may be provided with different thicknesses to improve the strength of the front cover outer plate 110. The front cover plastic inner plate 120 may also be provided with different thicknesses to improve the strength of the front cover plastic inner plate 120. Exemplarily, a larger thickness may be set at a hinge joint between the front cover outer plate 110 and the body of the vehicle, to pre-embedded a locking member for fixing a hinge.

In some examples, the material of the colored plastic layer 112 and the transparent plastic layer 111 may be polycarbonate.

In some examples, the material of the front cover plastic inner plate 120 may be polypropylene. Exemplarily, the material of the front cover plastic inner plate 120 may be polypropylene, with 15% talc powder being added, to improve the strength of the front cover plastic inner plate 120.

In some implementations, as shown in FIG. 3 and FIG. 4, the front cover structure 100 of an embodiment of the present application further includes an adhesive member 130. The adhesive member 130 is provided between the colored plastic layer 112 and the front cover plastic inner plate 120, to connect the front cover outer plate 110 and the front cover plastic inner plate 120.

In some examples, the adhesive member 130 may be provided along an edge of the front cover plastic inner plate 120. The adhesive member 130 may be first adhered to a surface of the front cover plastic inner plate 120 facing the front cover outer plate 110, and then connect the front cover plastic inner plate 120 to a side surface of the colored plastic layer 112 of the front cover outer plate 110. The adhesive member 130 is located between the colored plastic layer 112 and the front cover plastic inner plate 120, to implement a connection of the front cover outer plate 110 and the front cover plastic inner plate 120.

In some examples, the adhesive member 130 has tackiness. Exemplarily, the adhesive member 130 may be glass glue.

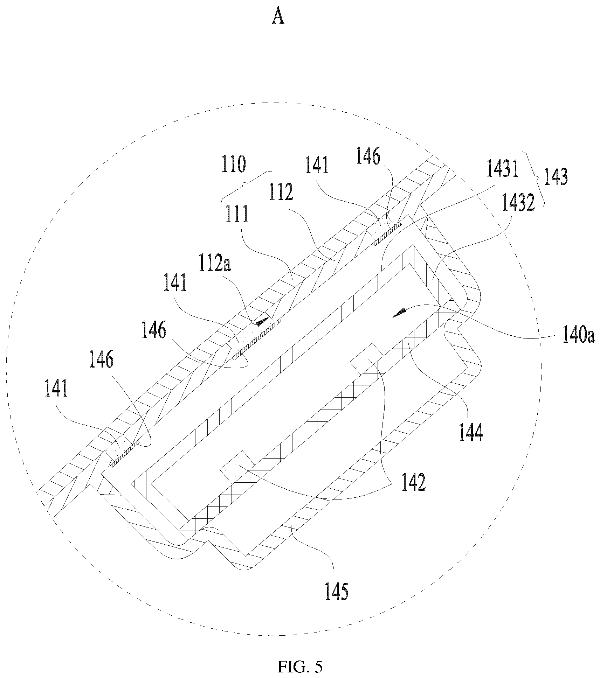

In some implementations, as shown in FIG. 3 and FIG. 5, the front cover structure 100 of an embodiment of the present application further includes a light-emitting identification assembly 140. The light-emitting identification assembly 140 includes a light-transmitting identification part 141 and a light source 142. The colored plastic layer 112 includes a receiving hole 112a. The light-transmitting identification part 141 is located in the receiving hole 112a. The light source 142 is correspondingly provided on a side of the light-transmitting identification part 141 away from the transparent plastic layer 111.

In some examples, the colored plastic layer 112 has opacity. The light-transmitting identification part 141 is located in the receiving hole 112a of the colored plastic layer 112. A side wall of the light-transmitting identification part 141 is connected to the colored plastic layer 112. A surface of the light-transmitting identification part 141 facing the transparent plastic layer 111 may be in contact with a lower surface of the transparent plastic layer 111.

When the light source 142 is turned on, light emitted by the light source 142 passes through the light-transmitting identification part 141 and the transparent plastic layer 111 in turn, until to an outside of the front cover structure 100, so that a pattern of the light-transmitting identification part 141 can be clearly displayed at night or in a dark environment, thereby the sense of science and technology for the vehicle can also be improved.

In some examples, the light-transmitting identification part 141, the colored plastic layer 112, and the transparent plastic layer 111 may be an integrated injection molding structure. Exemplarily, the front cover outer plate 110 may be manufactured by a three-material injection molding process. That is, the light-transmitting identification part 141, raw materials of the colored plastic layer 112, and the transparent plastic layer 111 may be respectively injected into three feed ports, to realize the integrated injection molding structure of the three. It should be noted that, when injecting the raw material of the colored plastic layer 112, it needs to be injected after the light-transmitting identification part 141 is formed. Similarly, when injecting the transparent plastic layer 111, it needs to be injected after the colored plastic layer 112 is formed.

Therefore, the integrated injection molding structure of the light-transmitting identification part 141, the colored plastic layer 112, and the transparent plastic layer 111 is beneficial for improving the integration degree of the front cover structure 100, thereby reducing the possibility of affecting processing time caused by the light-transmitting identification part 141 being clamped with the front cover structure 100.

In some examples, the light-transmitting identification part 141 may be a white light-transmitting plate-like structure.

In some examples, the light-transmitting identification part 141 may be designed as a brand logo of the vehicle, to improve identification of the vehicle.

In some examples, the light source 142 may be an LED (Light-Emitting Diode, light-emitting diode) point light source, to meet characteristics of an electric vehicle, such as energy saving and environmental protection. Exemplarily, the light source 142 may emit white rays of light.

In some implementations, as shown in FIG. 5, the light-emitting identification assembly 140 of an embodiment of the present application includes a light-homogenizing plate 143. The light-homogenizing plate 143 is provided between the light-transmitting identification part 141 and the light source 142.

The light-homogenizing plate 143 may convert a point light source or a line light source into a surface light source. Therefore, it is not easy for people to see a position of the light source 142 located inside when viewing the light-emitting identification assembly 140 from the outside of the vehicle. In addition, the light passing through the light-homogenizing plate 143 is soft and uniform, which is advantageous for reducing the possibility of dazzle or eye discomfort caused by direct illumination of the eyes by light source 142.

In some examples, the light-homogenizing plate 143 may be a frosted transparent panel.

In some implementations, as shown in FIG. 5, the light-emitting identification assembly 140 further includes a circuit board 144. The light source 142 is provided on the circuit board 144. The light-homogenizing plate 143 is connected to the circuit board 144, to form a receiving space 140a. The light source 142 is located in the receiving space 140a.

In some examples, the circuit board 144 may control the light source 142 turning on or off. The circuit board 144 may be electrically connected to a vehicle on-board controller of the vehicle, so that a user in the vehicle can control the light source 142 turning on or off through the vehicle on-board controller.

In some examples, along the thickness direction, the light-transmitting identification part 141, the light-homogenizing plate 143, and the light source 142 are provided at intervals. The light-homogenizing plate 143 may include a light-transmitting part 1431 and a support part 1432. The light-transmitting part 1431 and the light-transmitting identification part 141 are provided correspondingly. The support part 1432 is connected to the circuit board 144. Along the thickness direction, the support part 1432 may create a gap between the light-transmitting part 1431 and the light source 142, so that the light emitted from the light source 142 may pass through the light-homogenizing plate 143 and the light-transmitting identification part 141 more effectively.

In some implementations, as shown in FIG. 5, the light-emitting identification assembly 140 of an embodiment of the present application further includes a light source plastic support 145. The light source plastic support 145 is connected to the colored plastic layer 112. The circuit board 144 is provided on the light source plastic support 145.

In some examples, a connection between the light source plastic support 145 and the colored plastic layer 112 may form an internal space. The circuit board 144, the light source 142, and the light-homogenizing plate 143 may all be provided in the internal space. Therefore, on one hand, the light source plastic support 145 can support and fix the circuit board 144, and on the other hand, the light source plastic support 145 can protect components such as the circuit board 144 in its internal space, thereby reducing the possibility of affecting a light-emitting effect of the light source 142 caused by damaged components or dusty in the internal space.

In some examples, the light source plastic support 145 may be connected to the colored plastic layer 112 through a manner of bonding or clamping. The fixing manner of the circuit board 144 and the light source plastic support 145 may be an adhesive connection or a locking fastener connection.

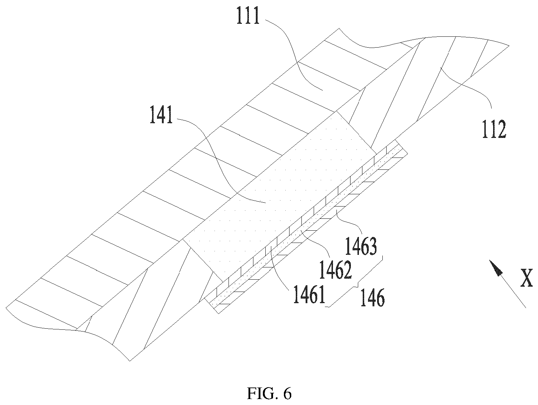

In some implementations, as shown in FIG. 6, the light-emitting identification assembly 140 further includes a light-transmitting film 146. The light-transmitting film 146 is provided on a surface of the colored plastic layer 112, away from the transparent plastic layer 111. The light-transmitting film 146 covers the light-transmitting identification part 141. The light-transmitting film 146 includes a hardened transparent film layer 1461, an intermediate light-transmitting pattern layer 1462, and a transparent plastic base layer 1463. The hardened transparent film layer 1461 is connected to the colored plastic layer 112.

In an environment where natural light or external light is relatively good, the light source 142 may be in an off state. The natural light passes through the transparent plastic layer 111 and the light-transmitting identification part 141 in turn and is projected onto the light-transmitting film 146, so that an effect of the light-transmitting film 146 can reflect an appearance effect of the light-transmitting identification part 141.

In some examples, the intermediate light-transmitting pattern layer 1462 may be located between the hardened transparent film layer 1461 and the transparent plastic base layer 1463. The color and effect of the intermediate light-transmitting pattern layer 1462 may be set according to market demand.

Exemplarily, by designing the pattern and color of the intermediate light-transmitting pattern layer 1462 of the light-transmitting film 146, the light-transmitting identification part 141 may have an electroplating effect in a natural light environment.

An embodiment of the present application further provides a vehicle, including the front cover structure 100, according to any one of the foregoing embodiments. A side of the front cover structure 100 close to driver's cab is hinged to the vehicle body of the vehicle, to enable the opening or closing of the front cover structure 100. A position of the front cover structure 100 close to the front end of the vehicle may be provided with a hood lock, to realize locking of the front cover structure 100 with the vehicle body.

In the description of the embodiments of the present application, it should be noted that, unless otherwise clearly defined and limited, the terms "install", "connect", and "connection" should be understood in a broad sense, for example, it may be a fixed connection, or may be indirectly connected through an intermediate medium, or may be an internal connection between two elements, or an interaction relationship between two elements. For those of ordinary skill in the art, the specific meanings of the above terms in the embodiments of the present application may be understood according to specific situations.

The apparatus or element referred to or implied in the embodiments of the present application must have a specific orientation, be constructed and operated in a specific orientation, and therefore it cannot be construed as a limitation to the embodiments of the present application. In the description of the embodiments of the present application, the meaning of "a plurality of" is two or more than two, unless otherwise specified precisely.

The terms "first", "second", "third", "fourth", and the like (if any) in the description, claims, and accompanying drawings of the embodiments of the present application are used to distinguish similar objects, and are not necessarily used to describe a specific order or sequence. It should be understood that the data used in this way may be interchanged under appropriate circumstances, such that the embodiments of the present application described herein can be implemented, for example, in orders other than those shown or described herein.

In addition, the terms "include" and "have" and any variations thereof are intended to cover a non-exclusive inclusion. For example, a process, method, system, product or device including a series of steps or units does not need to be limited to those steps or units expressly listed, but may include other steps or units not expressly listed or inherent to such process, method, product or device.

The term "a plurality of" herein refers to two or more than two. The term "and/or" herein is merely an association relationship describing an associated object, and indicates that three relationships may exist. For example, A and/or B may indicate such three cases: A exists alone; A and B exist simultaneously; and B exists alone. In addition, the character "/" herein generally indicates that the associated objects before and after are in an "or" relationship; in an equation, the character "/" indicates that the associated objects before and after are in a "divided" relationship.

It can be understood that various reference numbers involved in the embodiments of the present application are only for distinctions in convenience of description, and are not intended to limit the scope of the embodiments of the present application.

It can be understood that in the embodiments of the present application, a larger or smaller sequence number in the above-mentioned processes does not mean more forward or backward in an execution order, execution orders of respective processes should be determined by their functions and internal logics, and any limitation should not be constituted on the implementation processes of the embodiments of the present application.

## Claims

1. A front cover structure for a vehicle, wherein the front cover structure comprises:
a front cover outer plate, comprising a transparent plastic layer and a colored plastic layer, wherein along a thickness direction of the front cover outer plate, the transparent plastic layer is provided on an upper surface of the colored plastic layer; and
a front cover plastic inner plate, wherein along the thickness direction, the front cover outer plate and the front cover plastic inner plate are stacked, and the front cover plastic inner plate is connected to the colored plastic layer.

2. The front cover structure according to claim 1, wherein the front cover outer plate further comprises a hardened coating layer, and along the thickness direction, the hardened coating layer is provided on a surface of the transparent plastic layer away from the colored plastic layer.

3. The front cover structure according to claim 2, wherein along the thickness direction, edges of the colored plastic layer and the transparent plastic layer are aligned, and the hardened coating layer wraps the edges of the colored plastic layer and the transparent plastic layer.

4. The front cover structure according to claim 1, wherein the front cover structure further comprises an adhesive member, and the adhesive member is provided between the colored plastic layer and the front cover plastic inner plate, to connect the front cover outer plate and the front cover plastic inner plate.

5. The front cover structure according to any one of claims 1 to 4, wherein the front cover structure further comprises a light-emitting identification assembly, the light-emitting identification assembly comprises a light-transmitting identification part and a light source, the colored plastic layer comprises a receiving hole, the light-transmitting identification part is located in the receiving hole, and the light source is correspondingly provided on a side of the light-transmitting identification part away from the transparent plastic layer.

6. The front cover structure according to claim 5, wherein the light-emitting identification assembly comprises a light-homogenizing plate, and the light-homogenizing plate is provided between the light-transmitting identification part and the light source.

7. The front cover structure according to claim 6, wherein the light-emitting identification assembly further comprises a circuit board, the light source is provided on the circuit board, the light-homogenizing plate is connected to the circuit board, to form a receiving space, and the light source is located in the receiving space.

8. The front cover structure according to claim 7, wherein the light-emitting identification assembly further comprises a light source plastic support, the light source plastic support is connected to the colored plastic layer, and the circuit board is provided on the light source plastic support.

9. The front cover structure according to claim 5, wherein the light-emitting identification assembly further comprises a light-transmitting film, the light-transmitting film is provided on a surface of the colored plastic layer away from the transparent plastic layer, the light-transmitting film covers the light-transmitting identification part, the light-transmitting film comprises a hardened transparent film layer, an intermediate light-transmitting pattern layer and a transparent plastic base layer, and the hardened transparent film layer is connected to the colored plastic layer.

10. A vehicle, comprising the front cover structure according to any one of claims 1 to 9.
